(19) Europäisches Patentamt / European Patent Office / Office européen des brevets

(11) **EP 3 171 320 A1**

(12) **EUROPEAN PATENT APPLICATION**

(43) Date of publication:
24.05.2017 Bulletin 2017/21

(51) Int Cl.:
*G06Q 30/02* (2012.01)

(21) Application number: 15199735.0

(22) Date of filing: 14.12.2015

| | |
|---|---|
| (84) Designated Contracting States:<br>AL AT BE BG CH CY CZ DE DK EE ES FI FR GB<br>GR HR HU IE IS IT LI LT LU LV MC MK MT NL NO<br>PL PT RO RS SE SI SK SM TR<br>Designated Extension States:<br>**BA ME**<br>Designated Validation States:<br>**MA MD**<br><br>(30) Priority: 23.11.2015 TW 104138723<br><br>(71) Applicant: **Institute for Information Industry**<br>**Taipei City 106 (TW)**<br><br>(72) Inventors:<br>• **CHEN, Yi-Chun**<br>**320 Taoyuan City (TW)** | • **YANG, De-Nian**<br>**106 Taipei City (TW)**<br>• **HSIEH, Pei-Yu**<br>**221 New Taipei City (TW)**<br>• **LIN, Grace**<br>**970 Hualien City, Hualien County (TW)**<br>• **CHAN, Ya-Hui**<br>**880 Magong City, Penghu County (TW)**<br><br>(74) Representative: **Viering, Jentschura & Partner**<br>**mbB**<br>**Patent- und Rechtsanwälte**<br>**Kennedydamm 55 / Roßstrasse**<br>**40476 Düsseldorf (DE)** |

(54) **LOCATION BASED COMMUNITY INTEGRATION MATCHMAKING SYSTEM, METHOD AND COMPUTER READABLE RECORDING MEDIA FOR OPTIMIZING SALES**

(57) A location based community integration matchmaking system, method and computer readable recording media for optimizing sales is provided, including: obtaining user behavior pattern in an inquired area range based on stores information and user behavioral sequential information (S 130); calculating a location based community influence degree of each user in the inquired area range toward other location based users in a community based on the user behavior pattern, the community association and behavioral information, and calculating an interest domain influence degree of each user toward each interest domain; obtaining influence diffusing degree of each user toward each interest domain based on the location based community influence and the interest domain influence degree of each user (S 140); and finding a range with large influence degree in the inquired area range for performing advertisement setting, thereby achieving optimization analysis and visitor maximization of marketing channel of brick and mortar stores in the area.

FIG.1

**Description**

BACKGROUND

1. Technical Field

The instant disclosure relates to an multi-dimensional matchmaking system for optimizing sales based on community, space, time and cost, particularly, to an intelligence system and method involving the combination of the interaction between virtual community and the movement and time in real life, and the expected advertising marketing location of the vendor, in order to achieve maximization of the association between the marketing channel selection and visitor number, thereby efficiently distributing the budget of the vendor to multiple marketing channels and achieving maximum benefit.

2. Description of Related Art

Advertisement marketing contributes to the sales of products. The existing advertisement and supply chain management solution deems the customer as an individual. However, not every person is able to make the purchasing decision on their own. There is studies show that the users are unwilling to believe commercial advertisement but are easily affected by his/her friends for making purchasing decision. The probability for purchasing a product would increase if there are recommendations toward the product made by friends on community network. Therefore, there are plenty of customers depend on the evaluations made by friends on community network for making a purchasing decision.

However, the consideration of selecting the customer marketing channels (such as text, billboard, physical DM, Beacon, etc.) carried out by the vendor does not comprise the factor of community influence. The marketing strategies of the prior arts involve the consideration of the marketing efficiency regarding a "group" to carry out the optimization of marketing store subject selection. The marketing strategies of the prior arts do not consider the marketing efficiency created by the community relationship after marketing to a "single user" and the influence between the marketing strategies and cost. In addition, the existing community marketing strategies focus on online-sale product and pay no attention on the location characteristic and limitation for guiding the customers into the brick and mortar stores. Furthermore, based on geography spatial dimensions, the long-distance subject in the community diffusion effect is not likely to enter the store for purchasing, but there are still opportunities for such person to creating diffusion marketing information.

SUMMARY

An exemplary embodiment of the instant disclosure provides a location based community integration matchmaking system, method and computer readable recording media for optimizing sales. The exemplary embodiment of the instant disclosure is able to accommodate with community media, and analyze and obtain the optimum marketing channel adopted to brick and mortar stores, thereby achieving the purpose of maximum visitor number.

An exemplary embodiment of the instant disclosure provides a location based community integration matchmaking system for optimizing sales, comprising a demand receiving and information collecting module, a database module, a customer movement and consumption analyzing module, a community influence and diffusion calculating module and a marketing channel setting optimizing algorithm module. The demand receiving and information collecting module receives an advertisement setting demand applied in an inquired area range, and collects a stores information, obtains a community association and behavior information of a plurality of users, obtains a user behavioral sequential information of the users, and obtains an advertisement location candidate information based on the advertisement setting demand to create a location based network structure diagram. The database module couples to the demand receiving and information collecting module for storing the stores information, the user behavioral sequential information, the community association and behavior information, and an advertising channel mode and channel cost information. The customer movement and consumption behavior analyzing module couples to the demand receiving and information collecting module and the database module for obtaining a behavior pattern of the users in the inquired area range based on the stores information and the user behavioral sequential information. The community influence and diffusion calculating module couples to the customer movement and consumption behavior analyzing module and the database module for calculating a location based community influence degree of each user in the inquired area range toward other location based users in a community based on the behavior pattern of the users and the community association and behavioral information, and calculating an interest domain influence degree of each user toward each interest domain, and obtaining an influence diffusing degree of each user toward each interest domain based on the location based community influence and interest domain influence degree of each user. The marketing channel setting optimizing algorithm module couples to the community influence and diffusion calculating module and the database module, for performing optimization of advertisement setting based on a known influence probability of a plurality of advertisement setting location candidates in the inquired area range toward each user, the influence diffusing degree of each user toward each interest domain and a budget.

An exemplary embodiment of the instant disclosure provides a location based community integration matchmaking method for optimizing sales, comprising: receiving an advertisement setting demand in an inquired area range and collecting a stores information, obtaining a community association and behavior information of a plurality of users, obtaining a user behavioral sequential information of the users and obtaining an advertisement location candidate information based on the advertisement setting demand to create a location based network structure diagram; obtaining behavior patterns of the users in the inquired area range based on the stores information and the user behavioral sequential information; calculating a location based community influence degree of each user in the inquired area range toward other location based users in a community based on the behavior pattern of the users and the community association and behavioral information, and calculating an interest domain influence degree of each user toward each interest domain, and obtaining an influence diffusing degree of each user toward each interest domain based on the location based community influence and the interest domain influence degree of each user; and performing optimization of advertisement setting based on a known influence probability of a plurality of advertisement setting location candidates in the inquired area range toward each user, the influence diffusing degree of each user toward each interest domain and a budget.

An exemplary embodiment of the instant disclosure provides a computer readable recording media, the computer readable recording media records a set of computer executable program, when the computer readable recording media is read by a processor, the processor performs the computer executable program for implementing the steps of the location based community integration matchmaking method as described above.

To sum up, the exemplary embodiment of the instant disclosure provides a location based community integration matchmaking system, method and computer readable recording media for optimizing sales. By the combination of the interaction between virtual community and the movement and time in real life, and the expected advertising marketing location of the vendor, it is able to maximize the association between the multi-marketing channel selection and visitor number, and achieve maximum benefit under limited budget by efficiently distributing the budget into a plurality of marketing channel.

In order to further understand the techniques, means and effects of the instant disclosure, the following detailed descriptions and appended drawings are hereby referred to, such that, and through which, the purposes, features and aspects of the instant disclosure can be thoroughly and concretely appreciated; however, the appended drawings are merely provided for reference and illustration, without any intention to be used for limiting the instant disclosure.

BRIEF DESCRIPTION OF THE DRAWINGS

The accompanying drawings are included to provide a further understanding of the instant disclosure, and are incorporated in and constitute a part of this specification. The drawings illustrate exemplary embodiments of the instant disclosure and, together with the description, serve to explain the principles of the instant disclosure.

FIG. 1 is a functional block diagram of a location based community integration matchmaking system for optimizing sales provided by the embodiments of the instant disclosure.

FIG. 2 is a functional block diagram of a demand receiving and information collecting module provided by the embodiments of the instant disclosure.

FIG. 3 is a schematic view of a movement records stored in a community network system by a user provided by the embodiments of the instant disclosure.

FIG. 4 is a schematic view of physical advertisement location candidate and area communication media provided by the embodiments of the instant disclosure.

FIG. 5 is a schematic view of a location-based network structure diagram provided by the embodiments of the instant disclosure.

FIG. 6 is a functional block diagram of a customer movement and consumption behavior analyzing module provided by the embodiments of the instant disclosure.

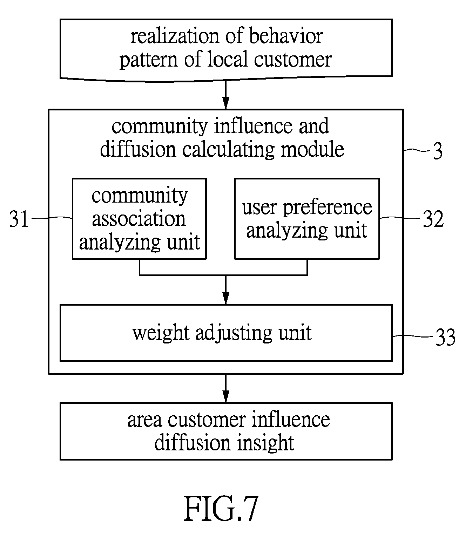

FIG. 7 is a schematic view of a community influence and diffusion calculating module provided by the embodiments of the instant disclosure.

FIG. 8 is a schematic view of a marketing channel setting optimizing algorithm module provided by the embodiments of the instant disclosure.

FIG. 9 is a schematic view of an optimum advertisement setting provided by the embodiments of the instant disclosure.

FIG. 10 is a flow chart of a location based community integration matchmaking method for optimizing sales provided by the embodiments of the instant disclosure.

DESCRIPTION OF THE EXEMPLARY EMBODIMENTS

Reference will now be made in detail to the exemplary embodiments of the instant disclosure, examples of which are illustrated in the accompanying drawings. Wherever possible, the same reference numbers are used in the drawings and the description to refer to the same or like parts. [Embodiments of a location based community integration matchmaking system for optimizing sales]

The location based community integration matchmaking system for optimizing sales of the present embodiment is applied to a vendor (or store) advertisement strategy evaluation in an inquired area range. The inquired area range is a geological area, for example, a city, a country or an administration area. Based on the combination of the interaction between virtual community and the movement and time in real life, and the expected advertising marketing location of the vendor, the present embodiment is able to maximum the association between the multi-marketing channel selection and the visitor number, and achieve maximum benefit under limited budget by efficiently distributing the budget into a plurality of marketing channel. In the present embodiment, by coordinating with the community network systems, the location based community integration matchmaking system considers the user group (community network system users) having larger influence towards the community network in each marketing channel in the inquired area range, reduces the channel cost of near-saturated influence, increases the budget for channels that has larger influence, and combines and analyzes the movement paths and preferences of user groups in different marketing channels and giving adaptive advertising content decision according to different marketing channels, thereby increasing the number of visitors in each type of user groups. The community network systems may be independently positioned or the platforms thereof may be integrated in the same system. However, the instant disclosure is not limited thereto. Hereinafter, the term "user" represents the user of community network system.

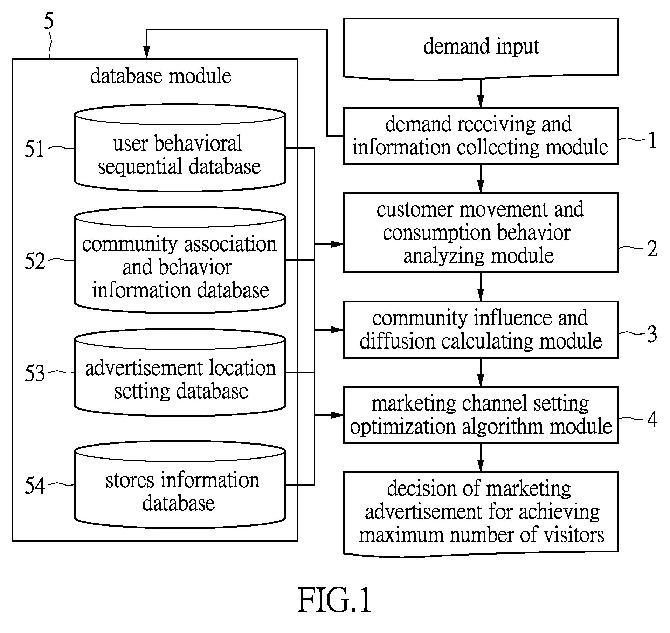

Please refer to FIG. 1. FIG. 1 is a functional block diagram of a location based community integration matchmaking system for optimizing sales provided by the embodiments of the instant disclosure. The location based community integration matchmaking system for optimizing sales comprises a demand receiving and information collecting module 1, a database module 5, a customer movement and consumption behavior analyzing module 2, a community influence and diffusion calculating module 3 and a marketing channel setting optimizing algorithm module 4. The location based community integration matchmaking system of the present embodiment may be a computer system such as a network server. However, the instant disclosure is not limited thereto. Each of the demand receiving and information collecting module 1, the customer movement and consumption behavior analyzing module 2 community influence and diffusion calculating module 3 and the marketing channel setting optimizing algorithm module 4 may be an operative processing unit, or the above demand receiving and information collecting module 1, the customer movement and consumption behavior analyzing module 2 community influence and diffusion calculating module 3 and the marketing channel setting optimizing algorithm module 4 are executed in an algorithm processor. However, the instant disclosure is not limited thereto.

The database module 5 couples to the demand receiving and information collecting module 1. The customer movement and consumption behavior analyzing module 2 couples to the de and receiving and information collecting module 1 and the database module 5. The community influence and diffusion calculating module 3 couples to the customer movement and consumption behavior analyzing module 2 and the database module 5. The marketing channel setting optimizing algorithm module 4 couples to the community influence and diffusion calculating module 3 and the database module 5.

The vendor and associated person which has the need of advertisement strategy evaluation may operate a human-computer interface of the input of the demand receiving and information collecting module 1 for providing the geological location to be evaluated and the product types of the advertisement. For example, when the location based community integration matchmaking system is a network server, the operator of demand input may connect to this network server through terminal interface (or device) (for example, by a browser) for inputting the above demand-associated information. After the demand receiving and information collecting module 1 receives the advertisement setting demand in the inquired area range, it collects the stores information in the inquired area range, obtains the community association and behavior information of a plurality of users, obtains the user behavioral sequential information of the users, and obtain the advertisement location candidate information, for creating a location based network structure diagram. After obtaining the above information, the above information will be stored in the database module 5. Before introducing the above information in detailed, the database module 5 will be introduced below.

The database module 5 comprises a user behavioral sequential database 51, a community association and behavior database 52, an advertisement location database 53 and a stores information database 54. The stores information database 54 is configured to store the stores information, the user behavioral sequential database 51 is configured to store the user behavioral sequential information, the community association and behavior database 52 is configured to store the community association and behavior information, and the advertisement setting database 53 is configured to store the advertisement channel mode and channel cost information.

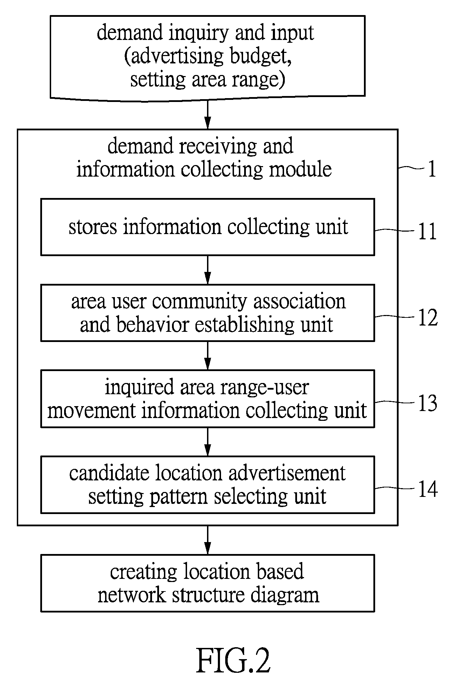

Next, the details for obtaining of the above information will be discussed below. Please refer to FIG. 2. FIG. 2 is a functional block diagram of a demand receiving and information collecting module provided by the embodiments of the instant disclosure. The demand receiving and information collecting module 1 comprises stores information collecting unit 11, area user community association and behavior establishing unit 12, inquired area range-user movement information collecting unit 13 and candidate location advertisement setting mode selecting unit 14. The area user community association and behavior establishing unit 12 couples to the stores information collecting unit 11. The inquired area range-user movement information collecting unit 13 couples the user community association and behavior establishing unit 12. The candidate location advertisement setting mode selecting unit couples the inquired area range-user movement information collecting unit 13.

The stores information collecting unit 11 is configured to obtain the stores information of the inquired area range based on the inquired area range of the demand. The stores information at least comprises the location name, the location longitude and latitude, store type and city name of the store. However, the instant disclosure is not limited thereto. The stores information may be known information. For instance, the operator of the location based community integration matchmaking system may cooperate with the stores in the inquired area range, and collects the information of the cooperated stores in the inquired area range in advance, or the location based community integration matchmaking system may cooperate with community network system vendor for obtaining the store information stored in the community network system. The above process for obtaining stores information is for illustrative purpose only and the instant disclosure is not limited thereto.

The area user community association and behavior establishing unit 12 is configured to obtain the community association of a plurality of users and the browser behavior of the users in the community network system by connecting to the community network system. Then, for example, according the community association and behavior information, the area user community association and behavior establishing unit 12 establishes preference interest information. The behavior information related to the user may be the combination of an integrated consumption, community activity and tracks. The means of connecting the area user community association and behavior establishing unit 12 to the community network system depends on the information connection (or communication structure) of the two systems, and the instant disclosure is not limited thereto. The community association and behavior information comprises friendship diagram represented by function $E(u_i, u_j)$, and the preference interest information (or refer to the community property diagram) is represented by function $E(u_i, att_k)$. $u_i$ represents the $i^{th}$ user, $u_j$ represents the $j^{th}$ user, and $att_k$ represents the interest preference of the user $u_i$.

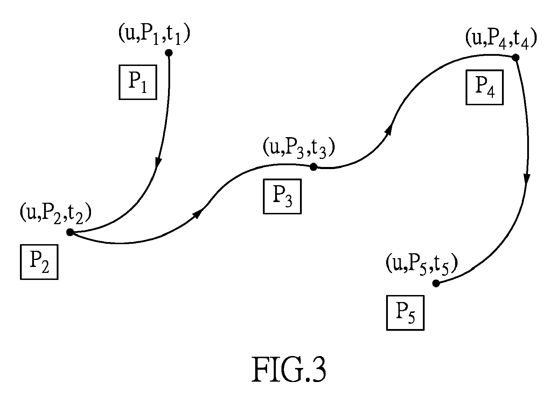

The inquired area range-user movement information collecting unit 13 is configured to obtain area movement records of a plurality of users by connecting to the community network system, and creating the user behavioral sequential information according to the movement records of the users. The user behavioral sequential information may comprises user information, the browsing/using/purchasing tracks records in the past, but the instant disclosure is limited thereto. The movement record is the check-in record on the community network, including check-in user name, check-in location and check-in time. For example, the check-in behavior is represented by $c(u, P_i, t)$, $u$ is the user name, $P_i$ is the location name, $t$ is the time. However, the instant disclosure is not limited thereto. Please refer to FIG. 3. FIG. 3 is a schematic view of a movement records stored in a community network system by a user provided by the embodiments of the instant disclosure. According to the above description, it is noted that the user behavioral sequential information comprises the user behavior that are stored based on the location and time of the movement behavior by the user via using community network.

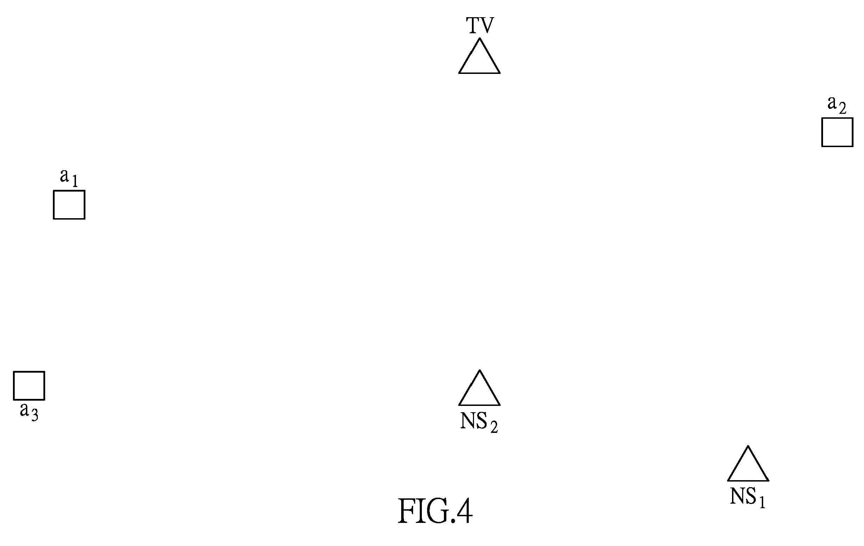

The candidate location advertisement setting mode selecting unit 14 creates advertisement location candidate information based on the settable advertisement channel mode and channel cost in the inquired area range. Please refer to FIG. 4. FIG. 4 is a schematic view of physical advertisement location candidate and area communication media provided by the embodiments of the instant disclosure. $a_1$, $a_2$, $a_3$ are the advertisement locations of the bricks and mortar stores, for example, the billboard of the stores. Communication media TV are TV walls. Communication media $NS_1$ and $NS_2$ are the locations of distributing paper news press. The advertisement location candidate information comprises the advertisement cost based on the advertisement mode, advertisement location and advertisement time. Taking FIG. 4 as an example, based on the type of communication media, advertisement location $a_1$, $a_2$, $a_3$ are physical billboard advertisement mode, TV wall is a video communication media, and paper news press $NS_1$ and $NS_2$ are print media. Based on actual condition, each advertisement location candidate has a specific cost. In addition to the difference in geological location, advertisement modes (i.e., media type) of each advertisement location candidate are different, and the available advertisement time and cost of each communication media are different. For example, the number of paper press distributed by the print media each day is limited (in general, several times a day, since the number of the paper press is limited), the TV wall may play in a cycle, and the advertisement billboard may displayed until being removed.

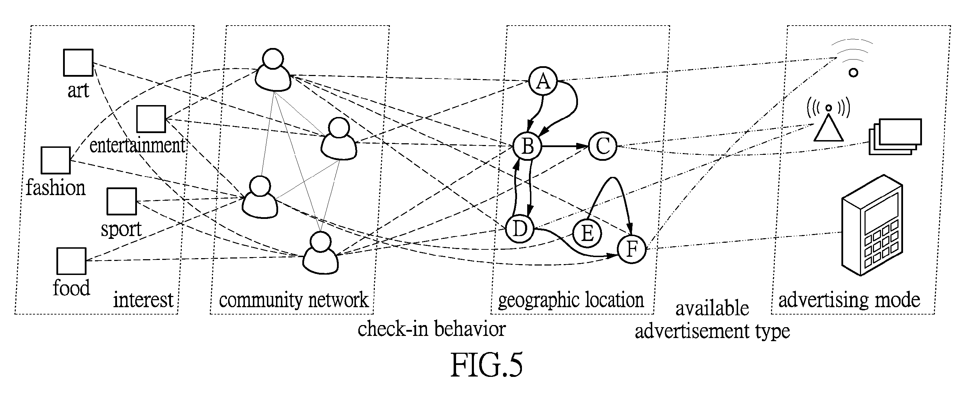

According to above, based on the stores information, the community association and behavior information, the user behavioral sequential information and advertisement location candidate information that have been obtained, it is able to create a virtual location based network structure diagram. The location based network structure diagram comprises community level, geological location level, and advertisement mode level. The community level comprises the relationship between the community members and the influence of the community members towards each interest domain, therefore, it is able to understand the attribute of the community members (which are obtained from the check-in or purchase made by the community members). The geological location level and the relationship between the community members are the behaviors of the community members (such as check-in behavior). The advertisement mode level has a plurality of advertisement mode (or mode), and the association between the advertisement mode level and the geological location level are the advertisement location candidate and the advertisement mode thereof. Taking FIG. 5 as an example, the location based network structure diagram comprises the association and association degree between the community network user and each interest type, the behavior made by the user toward each geological location (for example, check-in behavior), the available advertisement mode on each geological location, etc. However, the location based network structure diagram of FIG. 5 is only used for illustrating the association between each information, and not for limiting the instant disclosure.

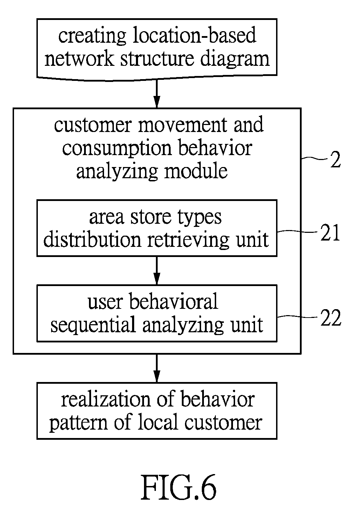

After obtaining the location based network structure diagram (including stores information, community association and behavior information, user behavioral sequential information and advertisement location candidate information), the customer movement and consumption behavior analyzing module 2 obtains the behavior pattern of the user in the inquired area range based on the stores information and user behavioral sequential information. Please refer to FIG. 6, in an embodiment, the customer movement and consumption behavior analyzing module 2 includes area store type distribution retrieving unit 21 and user behavioral sequential analyzing unit 22. The user behavioral sequential analyzing unit 22 couples to the area store type distribution retrieving unit 21. The area store type distribution retrieving unit 21 is configured to obtain stores information from the database 5. The user behavioral sequential analyzing unit 22 is configured to judge the distribution of the user movement and consumption behavior in the inquired area range by analyzing the user behavioral sequential information stored based on the stores information. Based on the user behavioral sequential information, it is able to derive the consumption behavior ability of the visitor for different types of stores, for example, "tall, handsome and rich", "middle class", etc. Taking check-in behavior as an example, the time line may connect to the check-in records of the user, and divide the records by a time threshold value $\Delta T$ (for example, a day) into different movement sequence (*TravelS*), the movement sequence is represented by *TravelS*$(c_1, c_2, ..., c_n)$, $c_{i+1}.t <= c_i.t$. In the present embodiment, by comparing the check-in information $(u, P_i, t)$ and the stores information, it is able to find out the user has check-in at a specific location and the location refers to a store of specific interest domain, and find out the user (or customer) have performed a consumption behavior in the store, thereby knowing that the user have performed a consumption behavior in a store of specific interest domain. According to a similar judgment, it is able to know the type and location of the stores that the user (customer) have performed a consumption behavior or have paid attention on a specific interest domain at a specific area or location.

After obtaining the user behavior pattern, the community influence and diffusion calculating module 3 further analysis and calculate as the following. The community influence and diffusion calculating module 3 comprises community association analyzing unit 31, user preference analyzing unit 32 and weight adjusting unit 33. The weight adjusting unit 33 couples the community association analyzing unit 31 and the user preference analyzing unit 32. The community association and behavior information comprises, for example, the community association between the users (friend, friend's friend, fans), interest, records of attended activities, type of posts (post number, like number, shared number), etc. The community association analyzing module 31 is configured to calculate the influence degree of each user in the inquired area range toward other location based user in the community based on the user behavior pattern and the community association and behavior information stored by the database module 5. The above information of the community may be obtained from the community network system. In the present embodiment, the location based community influence degree of each user toward other location based user in the community may be, for example, the influence degree for other user in the community network to enter a store by each user. However, the instant disclosure is not limited thereto, and the following calculation is merely an example for understanding the instant disclosure. The influence degree for other user in the community network to enter a store by each user is represented by $Score_{influence}$ $ij$, $Score_{influence}$ $ij = p(u_i, u_j)/n(u_i)$, wherein $p(u_i, u_j)$ represents the probability of the user $u_i$ and the user $u_j$ has spatial-social continuation relationship, $n(u_i)$ represents the number of site (location) have been visited by the user $u_i$. The spatial-social continuation relationship may be deemed as a connection from the user $u_i$ to his friend $u_j$, which means that $u_i$ would visit the location visited by his friend $u_j$. The spatial-social continuation relationship is defined as below:

Therefore, it is able to obtain a continuation relation graph $GF=(V, E)$, $V$

$$follow\big(c(u_i, P_i, t), u_j, \delta\big)$$

$$= \begin{cases} True, \ \exists t':c\big(u_j, P_i, t'\big), t \in [t', t'+\delta] \\ False, \ otherwise \end{cases}$$

represents the set of the users, E represents the user connection having spatial-social continuation relationship in V.

Then, the user preference analyzing unit 32 calculates a influence and preference degree of each user toward each interest domain based on the user behavioral sequential information stored by the database 5 and the browser behavior of the ser in the community network system, and obtaining the interest domain influence degree of each user toward each interest domain based on the influence and preference degree of each user toward each interest domain. The interest domain influence degree of each user toward each interest domain is determined by the influence of the user $u_i$ at interest domain (represented by attribute a), and the preference degree of the user $u_i$ toward the interest domain (attribute a). the influence of the user $u_i$ at attribute a is:

$$score_{ia} = \frac{u_i\_\text{check - in number related to attribute a}}{\text{check - in number related to attribute a of all users}}$$

The preference degree of the user $u_i$ toward attribute a is:

$$score_{ai} = \frac{u_i\ \text{check in number related to attribute a}}{u_i\ \text{all check in number of a}}$$

The relationship between the user and each interest preference are illustrated above. However, the user preference analyzing unit 32 will only consider the influence degree between the users. Therefore, according to the formula below, the influence relationship of the user between the attributes are converted into the influence relationship between the users. $w_{ij}$ represents the influence of users $u_i$ having similar interest toward user $u_j$:

$$w_{ij} = \sum_{a}^{p} score_{ia} \times score_{aj}$$

After that, the weight adjusting unit 33 performs weight calculation toward the location based community influence degree and interest domain influence degree of each user for obtaining the influence diffusing degree of each user toward each interest domain, the influence diffusing degree is represented by $Inf_{ij}$ :

$$Inf_{ij} = Score_{\inf lunce} + Score_{preference}\left(\sum_{p} w_{ij}\right), i \neq j$$

In other words, the community influence and diffusion calculating module 3 obtains the influence diffusing degree ($Inf_{ij}$) of each user toward each interest domain based on the location based community influence degree ($Score_{influenece}$ ij) and the interest domain influence degree ($w_{ij}$):

$$Inf_{ij} = Score_{\inf lunce} + Score_{preference}\left(\sum_{p} w_{ij}\right), i \neq j$$

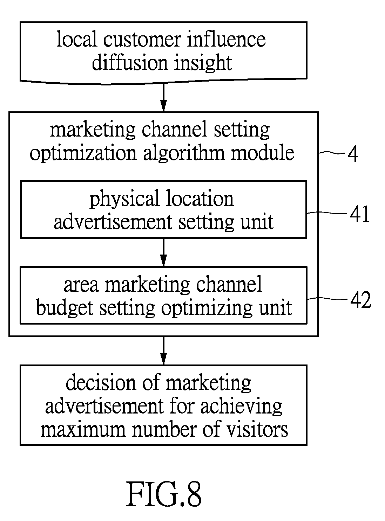

Next, the marketing channel setting optimizing algorithm module 4 performs optimization of advertisement setting based on a known influence probability of a plurality of advertisement setting location candidates in the inquired area range toward each user, the influence diffusing degree ($Inf_{ij}$) of each user toward each interest domain and a budget (known from the demand information input by the vendor). Please refer to FIG. 8. FIG. 8 is a schematic view of a marketing channel setting optimizing algorithm module provided by the embodiments of the instant disclosure. The marketing channel setting optimizing algorithm module 4 comprises physical location advertisement setting unit 41 and area marketing budget setting optimizing unit 42. The area marketing budget setting optimizing unit 42 couples to the physical location advertisement setting unit 41. By using the physical location advertisement setting unit 41, it is able to know the probability of a user will be influenced by the physical advertisement (the physical location that have been selected to display the advertisement among a plurality of advertisement location candidates) and the cost of the actual setting of the advertisement. In addition, based on the insight of the influence diffusion of the local customer, and the acknowledgement of the location candidate having maximum influence and the users having maximum influence, the area marketing budget setting optimizing unit 42 may optimize the visitor numbers based on different budget setting strategies. In other words, based on the influence diffusing degree, analyzing the group preference of different advertisement (or media) channel based on time factor and giving adaptive advertisement factor based on different media channels to attract visitors of different group. For example, the main visitors of store A are salary man, and the group hanging around a near location B at night is also salary man, it is recommended to set advertisement information at location B during the night. The following is an embodiment illustrated the optimization of the advertisement setting strategy. However, the instant disclosure is not limited thereto.

The physical location advertisement setting unit 41 obtains the advertisement channel mode and channel cost information from the advertisement location setting database 53. The settable advertisement location candidates assembly information $H$ and the advertisement setting cost $f_i$ of each location candidate $h_i \in H$. In addition, based on the insight of the influence diffusion of local customers, it is able to know that regarding a user set U in the target area, each user thereof $u_j \in U$ at least would be influenced by the advertisement location $h_i \in H$ candidate having a cost $c_{ij}$. The physical location advertisement setting unit 41 may perform "ordering strategy" to find out the more effective location candidate in the target area as an advertisement location. For example, for the purpose of minimize the cost setting, the physical location advertisement setting unit 41 enable all users in the target area at least influenced by a physical advertisement location candidate. In an embodiment, the problem related to physical advertisement location setting selection optimization may be processed by Primal-Dual linear algorithm. The original problem are: minimizing the setting cost of the advertisement location candidate minimize

$$\sum_{h_i \in H} f_i y_i + \sum_{h_i \in H, u_j \in U} c_{ij} x_{ij}$$

subject to

$$\sum_{h_i \in H} x_{ij} \geq 1, \forall u_j \in U \tag{1}$$

$$x_{ij} \leq y_i, \forall h_i \in H, u_j \in H \tag{2}$$

$$x_{ij} \in \{0,1\}, \forall h_i \in H, u_j \in U \tag{3}$$

$$y_i \in \{0,1\}, \forall h_i \in H \tag{4}$$

Wherein $x_{ij} = 1$ represents that user $u_j$ would be influenced by the advertisement location candidate $h_i$;
$y_i = 1$ represents that the advertisement will be set on advertisement location candidate $h_i$;
formula (1) ensures each user will be at least influenced by an advertisement location candidate;
formula (2) ensures if there is any user being influenced by the advertisement location $h_i$, it has to give up the advertisement location candidate $h_i$.

Next, about the Primal-Dual problem: maximizing the contribution degree of the acceptance of the advertisement by the customers: maximize

$$\sum\nolimits_{u_j \in U} \alpha_j$$

subject to

$$\sum\nolimits_{u_j \in U} \beta_{ij} \leq f_i, \forall h_i \in H \quad (1)$$

$$\alpha_j - \beta_{ij} \leq c_{ij}, \forall h_i \in H, u_j \in U \quad (2)$$

$$\beta_{ij} \geq 0, \forall h_i \in H, u_j \in U \quad (3)$$

wherein $\alpha_j$ represents the amount of money that the customer willing to contribute regarding the advertisement location;

$\beta_{ij}$ represents the contribution degree of the user $u_j$ towards the advertisement set on the advertisement location candidate $h_i$;
formula (1) may be understood as : the total cost for setting advertisement at location candidate $h_i$ is at least the total contribution degree of each user regarding the advertisement set on the advertisement location candidate $h_i$.

In order to solve the Primal-Dual problem, $(x,y)$ and $(\alpha,\beta)$ represents the optimal solution of the primal and dual, respectively. Find out the user $u_j$ having minimum contribution degree $\alpha_j$:

(a) $Nj = \{i: x_{ij} > 0\}$ represents how much of advertisement location candidate $h_i$ that the user $u_j$ would be influenced
(b) Setting the advertisement at the cheapest location in $N_j$, and distribute each user $u_k$ to the cheapest location in $N_j$ in order to achieve $N_j \cap N_k \neq \phi$. Repeat the above steps on the user that has no advertisement distributed thereto until all users has an advertisement.

According to the calculation principle and procedure above, the physical location advertisement setting unit 41 may know which of the user may be influenced by the physical advertisement and the total advertisement setting cost for the advertisement location candidate. For example, for optimizing the advertisement setting, it is able to find out the range that has larger influence in the inquired area. In an embodiment, according to the insight of customer influence diffusing degree mentioned above, it is able to find out the location candidate that has larger influence $c_{max}$ and the user group $D$ that has maximum influence degree $SP_{max}$. In addition, it is able to utilize the physical location advertisement setting unit 41 to optimize different budget setting strategies to influence the maximum visitor number. For example, first, setting budget to physical advertisement locations, and setting budget to broadcasting media such as newspaper, television commercial, broadcast and reputation marketing, etc. The details will be described in the next example.
For instance, giving an advertisement budget B ($B=B_H+B_c$). $B_H$: the budget for setting advertisement at physical advertisement location. $B_c$: the budget for setting advertisement at broadcasting media. Proceeding two operators-procedure:

$\{H', U'\} \leftarrow$ physical advertisement location setting procedure ($H, U, B\_H$)
wherein $H'$: actual physical advertisement setting location;
$U'$: the user set that is actual influenced by the actual physical advertisement setting location;
$H$: physical advertisement location candidate;
$U$: the user set in the target area;
$\{c_{max}, D, SP_{max}\} \leftarrow$ influence maximization location candidate selection procedure ($S, G, C, TR, B_c, I_{hub}=U'$);
wherein $c_{max}$: location candidate having larger influence;
$D$: user set having maximum influence $SP_{max}$;
$SP_{max}$: maximum diffusion degree;
$S$: exist stores information;
$G$: community network information;
$C$: location candidate set;

*TR*: maximum customer influence degree target area.

Using iterative processing the above two operative procedures repeatedly, and using Dynamic Programming approach to find the optimum solution.

Assuming that $\sigma[n,h]$ is used for recording the influence maximization location candidate selection procedure for finding the maximum diffusion degree $SP_{max}$

budget B=$n$,

budget $B_H$=$h$

budget $B_C$= ($n$-$h$)

initial state construction

$\sigma[0,0]$ = influence maximization location candidate selection procedure($S,G,C,TR,B_c,I_{hub}$),

$B_c$=0

$I_{hub}$ =physical advertisement location setting procedure ($H,U,B_H$=0)

State construction:

$\sigma[n+1,h]=max\{\sigma[n,h],SP_{max}'\}$,

wherein $SP_{max}'$= influence maximization location candidate selection procedure ($S,G,C,TR,n$-$h$-1,$I_{hub}$), $I_{hub}$= physical advertisement location setting procedure ($H,U,B_H$=$h$).

$\sigma[n,h+1]=max\{\sigma[n,h],SP_{max}\}$

wherein $SP_{max}'$= influence maximization location candidate selection procedure($S,G,C,TR,n$-$h$-1,$I_{hub}$) $I_{hub}$= physical advertisement location setting procedure($H,U,B_H$=$h$+1)*.

When all the state constructions are finished $\sigma[n=0..B,h=0..B]$

$$\hat{i} = \arg \max_{0 \le i \le B} \sigma[B, \hat{i}]$$

$\sigma[B,\hat{i}]$ represents optimized budget setting, wherein budget $B_H = \hat{i}$ , budget $B_C = B - \hat{i}$.

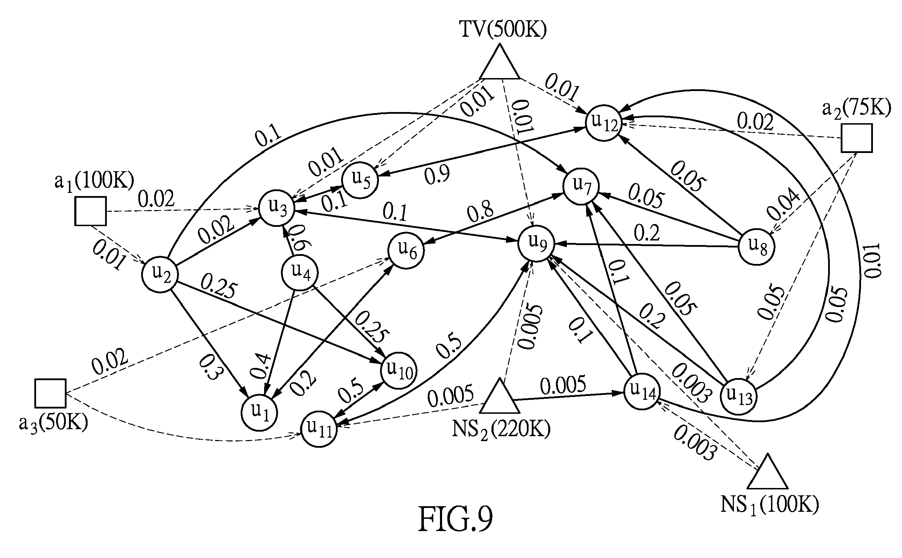

The results achieved by the area marketing channel budget setting optimizing unit 42 is, for example, shown in FIG. 9. Physical advertisement locations $a_1$, $a_2$, $a_3$ are physical billboard advertisement mode, TV wall is a video communication media, and paper news $NS_1$ and $NS_2$ are paper communication media. The users that is influenced by the advertisement are $u_1$, $u_2$, $u_3$, $u_4$, $u_5$, $u_6$, $u_7$, $u_8$, $u_9$, $u_{10}$, $u_{11}$, $u_{12}$, $u_{13}$, $u_{14}$. The setting costs of each advertisement location (advertisement location candidate that have been chosen) are the number in the parenthesis. The probability of influence to the users of these advertisement locations are known, for example, estimating from the activity and interest of the community network users. However, the instant disclosure is not limited thereto. The influence probability of the advertisement locations towards the users are represented by the number beside the dash line, for example, the influence probability of the advertisement location $a_1$ towards the user $u_2$ is 0.01 and the influence probability of the advertisement location $a_1$ towards the user $u_3$ is 0.02. The arrow represents the users that have been influenced. The degrees of influence between the users are represented by the number beside the arrows, for example, the degree of influence of the user $u_3$ from the user $u_2$ is 0.2. The user being pointed by the arrow is the one that being influenced.

[Embodiment of the location based community integration matchmaking method and the computer readable recording media for optimum sales]

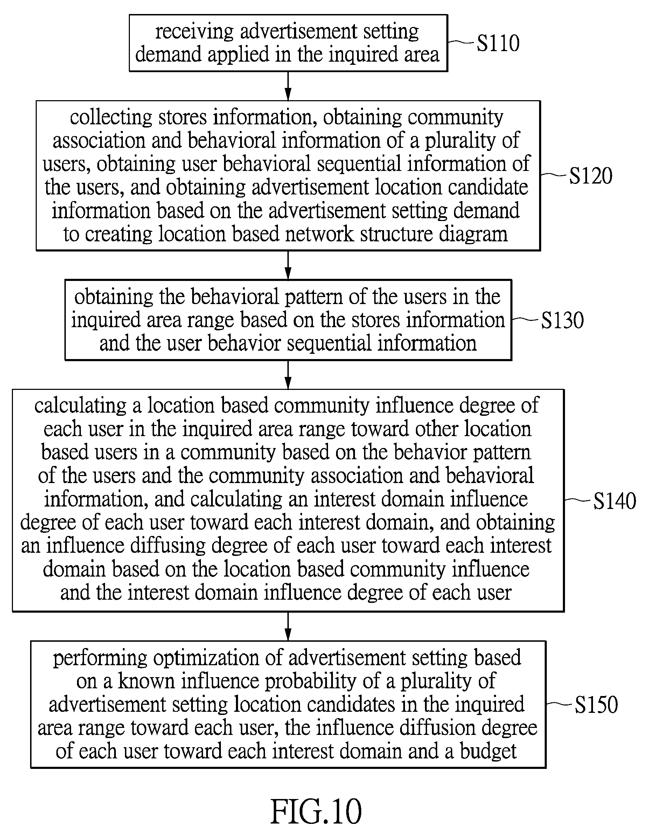

Please refer to FIG. 10. FIG. 10 is a flow chart of a location based community integration matchmaking method for optimizing sales provided by the embodiments of the instant disclosure. The location based community integration matchmaking method for optimum sales may be conducted by the location based community integration matchmaking system for optimum sales described above. The method comprises: receiving an advertisement setting demand in an inquired area range (step S110). Then, collecting a stores information, obtaining a community association and behavior information of a plurality of user, obtaining a user behavioral sequential information of the users and obtaining an advertisement location candidate information based on the advertisement setting demand to create a location based network structure diagram (step S120). Next, obtaining behavior patterns of the users in the inquired area range based on the stores information and the user behavioral sequential information (step S130). After that, calculating a location based community influence degree of each user in the inquired area range toward other location based users in a community based on the behavior pattern of the users and the community association and behavioral information, and calculating an interest domain influence degree of each user toward each interest domain, and obtaining an influence diffusing degree of each user toward each interest domain based on the location based community influence and the interest domain influence degree of each user (step S140). At last, performing optimization of advertisement setting based on a known influence probability of a plurality of advertisement setting location candidates in the inquired area range toward each user, the influence diffusing degree of each user toward each interest domain and a budget (step S150). The details of the step S110 to step S150 are described above, and are not going to describe herein.

In addition, the instant disclosure may also utilize a computer readable recording media to store the computer program of the above location based community integration matchmaking method for optimum sales for processing the above steps. The computer readable recording media may be floppy disks, hard disks, CDs, flash drives, tapes, network accessible database or other storage media having the same function which is well-known to those skilled in the art.

[the effectiveness of the embodiments]

In sum, based on the combination of the interaction between virtual community and the movement and time in real life, and the expected advertising marketing location of the vendor, the location based community integration matchmaking system, method and the computer readable recording media for optimum sales are able to achieve maximization of the association between the marketing channel selection and visitor number under limited advertisement marketing budget, thereby efficiently distributing the budget of the vendor to multiple marketing channel and achieving maximum benefit.

The above-mentioned descriptions represent merely the exemplary embodiments of the instant disclosure, without any intention to limit the scope of the instant disclosure thereto. Various equivalent changes, alternations or modifications based on the claims of instant disclosure are all consequently viewed as being embraced by the scope of the instant disclosure.

**Claims**

1.  A location based community integration matchmaking system for optimizing sales, comprising:

    a demand receiving and information collecting module (1) configured to receive an advertisement setting demand applied in an inquired area range, and collect a stores information, obtain a community association and behavior information of a plurality of users, obtain a user behavioral sequential information of the users and obtain an advertisement location candidate information based on the advertisement setting demand to create a location based network structure diagram;
    a database module (5) coupled to the demand receiving and information collecting module (1), configured to store the stores information, the user behavioral sequential information, the community association and behavior information, and an advertising channel mode and channel cost information;
    a customer movement and consumption behavior analyzing module (2) coupled to the demand receiving and information collecting module (1) and the database module (5), configured to obtain a behavior pattern of the users in the inquired area range based on the stores information and the user behavioral sequential information;
    a community influence and diffusion calculating module (3) coupled to the customer movement and consumption behavior analyzing module (2) and the database module (5), configured to calculate a location based community influence degree of each user in the inquired area range toward other location based users in a community based on the behavior pattern of the users and the community association and behavioral information, and calculate an interest domain influence degree of each user toward each interest domain, and obtain an influence diffusing degree of each user toward each interest domain based on the location based community influence and interest domain influence degree of each user; and
    a marketing channel setting optimizing algorithm module (4) coupled to the community influence and diffusion calculating module (3) and the database module (5), configured to perform optimization of advertisement setting based on a known influence probability of a plurality of advertisement setting location candidates in the inquired area range toward each user, the influence diffusing degree of each user toward each interest domain and a budget.

2.  The location based community integration matchmaking system according to claim 1, wherein the demand receiving and information collecting module (1) comprises:

    a stores information collecting unit (11) configured to obtain the stores information;
    an area user community association and behavior establishing unit (12) coupled to the stores information collecting unit (11), configured to obtain the community association of the users and a browser behavior of the users in a community network system by connecting to the community network system, and establish a preference interest information;

an inquired area range-user moving information collecting unit (13) coupled to the area user community association and behavior establishing unit (12), configured to obtain a movement record of the user by connecting to the community network system, and create the user behavioral sequential information based on the movement record of the user; and

a candidate location advertisement setting mode selecting unit (14) coupled to the inquired area range-user movement information collecting unit (13), configured to create the advertisement location candidate information based on an settable advertisement channel type and channel cost in the inquired area range.

3. The location based community integration matchmaking system according to claim 1, wherein the stores information at least comprises location name, location longitude and latitude, store type and city name; wherein the advertisement location candidate information comprises an advertisement cost based on advertising mode, advertising location and advertising time.

4. The location based community integration matchmaking system according to claim 1, wherein the community association and behavior information comprises a friendship diagram and a community attribute diagram; wherein the user behavioral sequential information is based on the user behaviors stored according to the location and time of a moving behavior performed by the users through a community network system.

5. The location based community integration matchmaking system according to claim 1, wherein the advertisement location candidate information comprises an advertisement cost based on advertising mode, advertising location and advertising time.

6. The location based community integration matchmaking system according to claim 1, wherein the customer movement and consumption behavior analyzing module (2) comprises:

an area store type distribution retrieving unit (21) configured to obtain the stores information from the database module; and

a user behavioral sequential analyzing unit (22) coupled to the area store type distribution retrieving unit (21), configured to analyze the user behavioral sequential information stored in the database module based on the stores information to determine a distribution of the movement and consumption behavior of the users in the inquired area range.

7. The location based community integration matchmaking system according to claim 1, wherein the community influence and diffusion calculating module (3) comprises:

a community association analyzing unit (31), configured to calculate the location based community influence degree of each user based on the behavior pattern of the users and the community association and behavior information stored by the database module;

a user preference analyzing unit (32) configured to calculate an influence and a preference degree of each user toward each interest domain based on the user behavioral sequential information stored by the database module and a browser behavior of the users in a community network system, and obtain the interest domain influence degree of each user toward each interest domain based on the influence and the preference degree of each user toward each interest domain; and

a weight adjusting unit (33) coupled to the community association analyzing unit (31) and the user preference analyzing unit (32), configured to perform weight calculation toward the location based community influence degree and the interest domain influence degree of each user in the inquired area range to obtain the influence diffusing degree of each user toward each interest domain.

8. The location based community integration matchmaking system according to claim 1, wherein the marketing channel setting optimizing algorithm module comprises:

a physical location advertisement setting unit configured to obtain a probability of each user being influenced by a positioned physical advertisement and an actual cost of advertisement setting; and

an area marketing channel budget setting optimizing unit coupled to the physical location advertisement setting unit, configured to optimize different budging setting strategies to influence a maximum number of visitors.

9. A location based community integration matchmaking method for optimizing sales, comprising:

receiving an advertisement setting demand in an inquired area range and collecting a stores information (S110), obtaining a community association and behavior information of a plurality of user, obtaining a user behavioral sequential information of the users and obtaining an advertisement location candidate information based on the advertisement setting demand to create a location based network structure diagram (S120);

obtaining behavior patterns of the users in the inquired area range based on the stores information and the user behavioral sequential information (S130);

calculating a location based community influence degree of each user in the inquired area range toward other location based users in a community based on the behavior pattern of the users and the community association and behavioral information, and calculating an interest domain influence degree of each user toward each interest domain, and obtaining an influence diffusing degree of each user toward each interest domain based on the location based community influence and the interest domain influence degree of each user (S140); and

performing optimization of advertisement setting based on a known influence probability of a plurality of advertisement setting location candidates in the inquired area range toward each user, the influence diffusing degree of each user toward each interest domain and a budget (S150).

10. The location based community integration matchmaking method according to claim 9, wherein the step of obtaining the community association and behavior information of a plurality of user comprises obtaining the community association of the users and a browser behavior of the users in a community network system by connecting to the community network system and establishing a preference interest information;

wherein the step of obtaining the user behavioral sequential information of the users comprises obtaining a movement record of the user by connecting to the community network system, and creating the user behavioral sequential information based on the movement record of the user;

wherein the user behavioral sequential information is based on the user behaviors stored according to the location and time of a moving behavior performed by the users through a community network system; wherein the behavior pattern of the users comprises a distribution of the movements and consumption behavior of the users.

11. The location based community integration matchmaking method according to claim 9, wherein the step of obtaining the advertisement location candidate information comprises creating the advertisement location candidate based on a settable advertisement channel type and channel cost in the inquired area range; wherein the advertisement location candidate information comprises an advertisement cost based on advertising mode, advertising location and advertising time.

12. The location based community integration matchmaking method according to claim 9, wherein the stores information at least comprises location name, location longitude and latitude, store type and city name.

13. The location based community integration matchmaking method according to claim 9, wherein the community association and behavior information comprises a friendship diagram and a community attribute diagram.

14. The location based community integration matchmaking method according to claim 9, wherein the step of calculating the interest domain influence degree of each user toward each interest domain comprises calculating an influence and a preference degree of each user toward each interest domain based on the user behavioral sequential information stored by the database module and a browser behavior of the users in a community network system, and obtaining the interest domain influence degree of each user toward each interest domain based on the influence and the preference degree of each user toward each interest domain.

15. The location based community integration matchmaking method according to claim 9, wherein the step of obtaining the influence diffusing degree of each user toward each interest domain comprises performing weight calculation toward the location based community influence degree and the interest domain influence degree of each user in the inquired area range to obtain the influence diffusing degree of each user toward each interest domain.

16. A computer readable recording media, the computer readable recording media records a set of computer executable program, when the computer readable recording media is read by a processor, the processor performs the steps of:

receiving an advertisement setting demand in an inquired area range (S110);

collecting a stores information, obtaining a community association and behavior information of a plurality of user, obtaining a user behavioral sequential information of the users and obtaining an advertisement location candidate information based on the advertisement setting demand to create a location based network structure diagram (S120);

obtaining behavior patterns of the users in the inquired area range based on the stores information and the user behavioral sequential information (S130);

calculating a location based community influence degree of each user in the inquired area range toward other location based users in a community based on the behavior pattern of the users and the community association and behavioral information, and calculating an interest domain influence degree of each user toward each interest domain, and obtaining an influence diffusing degree of each user toward each interest domain based on the location based community influence and interest domain influence degree of each user (S140); and

performing optimization of advertisement setting based on a known influence probability of a plurality of advertisement setting location candidates in the inquired area range toward each user, the influence diffusing degree of each user toward each interest domain and a budget (S150).

**Amended claims in accordance with Rule 137(2) EPC.**

1. A location based community integration matchmaking system for optimizing sales, comprising:

a demand receiving and information collecting module (1) configured to receive an advertisement setting demand applied in an inquired area range, and collect a stores information, obtain a community association and behavior information of a plurality of users, obtain a user behavioral sequential information of the users and obtain an advertisement location candidate information based on the advertisement setting demand to create a location based network structure diagram;

a database module (5) coupled to the demand receiving and information collecting module (1), configured to store the stores information, the user behavioral sequential information, the community association and behavior information, and an advertising channel mode and channel cost information;

a customer movement and consumption behavior analyzing module (2) coupled to the demand receiving and information collecting module (1) and the database module (5), configured to obtain a behavior pattern of the users in the inquired area range based on the stores information and the user behavioral sequential information;

a community influence and diffusion calculating module (3) coupled to the customer movement and consumption behavior analyzing module (2) and the database module (5), configured to calculate a location based community influence degree of each user in the inquired area range toward other location based users in a community based on the behavior pattern of the users and the community association and behavioral information, and calculate an interest domain influence degree of each user toward each interest domain, and obtain an influence diffusing degree of each user toward each interest domain based on the location based community influence and interest domain influence degree of each user; and

a marketing channel setting optimizing algorithm module (4) coupled to the community influence and diffusion calculating module (3) and the database module (5), configured to perform optimization of advertisement setting based on a known influence probability of a plurality of advertisement setting location candidates in the inquired area range toward each user, the influence diffusing degree of each user toward each interest domain and a budget.

2. The location based community integration matchmaking system according to claim 1, wherein the demand receiving and information collecting module (1) comprises:

a stores information collecting unit (11) configured to obtain the stores information;

an area user community association and behavior establishing unit (12) coupled to the stores information collecting unit (11), configured to obtain the community association of the users and a browser behavior of the users in a community network system by connecting to the community network system, and establish a preference interest information;

an inquired area range-user moving information collecting unit (13) coupled to the area user community association and behavior establishing unit (12), configured to obtain a movement record of the user by connecting to the community network system, and create the user behavioral sequential information based on the movement record of the user; and

a candidate location advertisement setting mode selecting unit (14) coupled to the inquired area range-user movement information collecting unit (13), configured to create the advertisement location candidate information based on an settable advertisement channel type and channel cost in the inquired area range.

3. The location based community integration matchmaking system according to claim 1, wherein the stores information at least comprises location name, location longitude and latitude, store type and city name; wherein the advertisement location candidate information comprises an advertisement cost based on advertising mode, advertising location and advertising time.

4. The location based community integration matchmaking system according to claim 1, wherein the community association and behavior information comprises a friendship diagram and a community attribute diagram; wherein the user behavioral sequential information is based on the user behaviors stored according to the location and time of a moving behavior performed by the users through a community network system.

5. The location based community integration matchmaking system according to claim 1, wherein the advertisement location candidate information comprises an advertisement cost based on advertising mode, advertising location and advertising time.

6. The location based community integration matchmaking system according to claim 1, wherein the customer movement and consumption behavior analyzing module (2) comprises:

   an area store type distribution retrieving unit (21) configured to obtain the stores information from the database module; and
   a user behavioral sequential analyzing unit (22) coupled to the area store type distribution retrieving unit (21), configured to analyze the user behavioral sequential information stored in the database module based on the stores information to determine a distribution of the movement and consumption behavior of the users in the inquired area range.

7. The location based community integration matchmaking system according to claim 1, wherein the community influence and diffusion calculating module (3) comprises:

   a community association analyzing unit (31), configured to calculate the location based community influence degree of each user based on the behavior pattern of the users and the community association and behavior information stored by the database module;
   a user preference analyzing unit (32) configured to calculate an influence and a preference degree of each user toward each interest domain based on the user behavioral sequential information stored by the database module and a browser behavior of the users in a community network system, and obtain the interest domain influence degree of each user toward each interest domain based on the influence and the preference degree of each user toward each interest domain; and
   a weight adjusting unit (33) coupled to the community association analyzing unit (31) and the user preference analyzing unit (32), configured to perform weight calculation toward the location based community influence degree and the interest domain influence degree of each user in the inquired area range to obtain the influence diffusing degree of each user toward each interest domain.

8. The location based community integration matchmaking system according to claim 1, wherein the marketing channel setting optimizing algorithm module comprises:

   a physical location advertisement setting unit configured to obtain a probability of each user being influenced by a positioned physical advertisement and an actual cost of advertisement setting; and
   an area marketing channel budget setting optimizing unit coupled to the physical location advertisement setting unit, configured to optimize different budging setting strategies to influence a maximum number of visitors.

9. A location based community integration matchmaking method for optimizing sales, which is conducted by a location based community integration matchmaking system, the method comprises :

   providing a demand receiving and information collecting module (1) for receiving an advertisement setting demand in an inquired area range and collecting a stores information (S 110), obtaining a community association and behavior information of a plurality of user, obtaining a user behavioral sequential information of the users and obtaining an advertisement location candidate information based on the advertisement setting demand to create a location based network structure diagram (S120);
   providing a customer movement and consumption behavior analysis module (2) for obtaining behavior patterns of the users in the inquired area range based on the stores information and the user behavioral sequential information (S130);
   providing a community influence and diffusion calculating module (3) for calculating a location based community influence degree of each user in the inquired area range toward other location based users in a community based on the behavior pattern of the users and the community association and behavioral information, and calculating an interest domain influence degree of each user toward each interest domain, and obtaining an influence diffusing degree of each user toward each interest domain based on the location based community influence and the interest domain influence degree of each user (S140); and

providing a marketing channel setting optimizing algorithm module (4) for performing optimization of advertisement setting based on a known influence probability of a plurality of advertisement setting location candidates in the inquired area range toward each user, the influence diffusing degree of each user toward each interest domain and a budget (S150).

10. The location based community integration matchmaking method according to claim 9, wherein the step of obtaining the community association and behavior information of a plurality of user comprises obtaining the community association of the users and a browser behavior of the users in a community network system by connecting to the community network system and establishing a preference interest information;

wherein the step of obtaining the user behavioral sequential information of the users comprises obtaining a movement record of the user by connecting to the community network system, and creating the user behavioral sequential information based on the movement record of the user;

wherein the user behavioral sequential information is based on the user behaviors stored according to the location and time of a moving behavior performed by the users through a community network system; wherein the behavior pattern of the users comprises a distribution of the movements and consumption behavior of the users.

11. The location based community integration matchmaking method according to claim 9, wherein the step of obtaining the advertisement location candidate information comprises creating the advertisement location candidate based on a settable advertisement channel type and channel cost in the inquired area range; wherein the advertisement location candidate information comprises an advertisement cost based on advertising mode, advertising location and advertising time.

12. The location based community integration matchmaking method according to claim 9, wherein the stores information at least comprises location name, location longitude and latitude, store type and city name.

13. The location based community integration matchmaking method according to claim 9, wherein the community association and behavior information comprises a friendship diagram and a community attribute diagram.

14. The location based community integration matchmaking method according to claim 9, wherein the step of calculating the interest domain influence degree of each user toward each interest domain comprises calculating an influence and a preference degree of each user toward each interest domain based on the user behavioral sequential information stored by the database module and a browser behavior of the users in a community network system, and obtaining the interest domain influence degree of each user toward each interest domain based on the influence and the preference degree of each user toward each interest domain.

15. The location based community integration matchmaking method according to claim 9, wherein the step of obtaining the influence diffusing degree of each user toward each interest domain comprises performing weight calculation toward the location based community influence degree and the interest domain influence degree of each user in the inquired area range to obtain the influence diffusing degree of each user toward each interest domain.

16. A computer readable recording media, the computer readable recording media records a set of computer executable program, when the computer readable recording media is read by a processor, the processor performs the steps of:

receiving an advertisement setting demand in an inquired area range (S 110);
collecting a stores information, obtaining a community association and behavior information of a plurality of user, obtaining a user behavioral sequential information of the users and obtaining an advertisement location candidate information based on the advertisement setting demand to create a location based network structure diagram (S120);
obtaining behavior patterns of the users in the inquired area range based on the stores information and the user behavioral sequential information (S130);
calculating a location based community influence degree of each user in the inquired area range toward other location based users in a community based on the behavior pattern of the users and the community association and behavioral information, and calculating an interest domain influence degree of each user toward each interest domain, and obtaining an influence diffusing degree of each user toward each interest domain based on the location based community influence and interest domain influence degree of each user (S140); and performing optimization of advertisement setting based on a known influence probability of a plurality of advertisement setting location candidates in the inquired area range toward each user, the influence diffusing degree of each user toward each interest domain and a budget (S150).

FIG.1

```
┌─────────────────────────────┐
│     demand inquiry and input    │
│       (advertising budget,      │
│        setting area range)      │
└─────────────────────────────┘
              │
              ▼
┌───────────────────────────────────────┐
│       demand receiving and            │
│   information collecting module        │──～1
│  ┌──────────────────────────────┐    │
│  │  stores information collecting unit │──～11
│  └──────────────────────────────┘    │
│              │                         │
│              ▼                         │
│  ┌──────────────────────────────┐    │
│  │  area user community association   │──～12
│  │   and behavior establishing unit   │    │
│  └──────────────────────────────┘    │
│              │                         │
│              ▼                         │
│  ┌──────────────────────────────┐    │
│  │   inquired area range-user         │──～13
│  │ movement information collecting unit│   │
│  └──────────────────────────────┘    │
│              │                         │
│              ▼                         │
│  ┌──────────────────────────────┐    │
│  │  candidate location advertisement  │──～14
│  │   setting pattern selecting unit   │    │
│  └──────────────────────────────┘    │
└───────────────────────────────────────┘
              │
              ▼
┌─────────────────────────────┐
│      creating location based    │
│     network structure diagram   │
└─────────────────────────────┘
```

FIG.2

FIG.3

FIG.4

EP 3 171 320 A1

FIG.5

creating location-based
network structure diagram

↓

customer movement and
consumption behavior
analyzing module ~2

area store types
distribution retrieving unit ~21

↓

user behavioral
sequential analyzing unit ~22

↓

realization of behavior
pattern of local customer

FIG.6

```
┌─────────────────────────────────────┐
│     realization of behavior          │
│     pattern of local customer        │
└─────────────────────────────────────┘
                  │
                  ▼
┌─────────────────────────────────────────────┐
│     community influence and                  │
│     diffusion calculating module        ──── 3
│  ┌──────────────┐  ┌──────────────────┐      │
│  │  community   │  │                  │      │
│  │  association │  │ user preference  │──── 32
│31│  analyzing   │  │ analyzing unit   │      │
│  │  unit        │  │                  │      │
│  └──────────────┘  └──────────────────┘      │
│         │                   │                │
│         └─────────┬─────────┘                │
│                   ▼                          │
│  ┌───────────────────────────────────┐      │
│  │     weight adjusting unit          │──── 33
│  └───────────────────────────────────┘      │
└─────────────────────────────────────────────┘
                  │
                  ▼
┌─────────────────────────────────────┐
│     area customer influence          │
│     diffusion insight                │
└─────────────────────────────────────┘
```

FIG.7

```
┌─────────────────────────────┐
│   local customer influence  │
│      diffusion insight      │
└─────────────────────────────┘
              │
              ▼
┌───────────────────────────────┐
│   marketing channel setting   │
│  optimization algorithm module│────4
│ ┌───────────────────────────┐ │
│ │   physical location       │ │
│ │ advertisement setting unit│─┼──41
│ └───────────────────────────┘ │
│             │                 │
│             ▼                 │
│ ┌───────────────────────────┐ │
│ │   area marketing channel  │ │
│ │budget setting optimizing unit│──42
│ └───────────────────────────┘ │
└───────────────────────────────┘
              │
              ▼
┌─────────────────────────────┐
│    decision of marketing    │
│  advertisement for achieving │
│  maximum number of visitors  │
└─────────────────────────────┘
```

FIG.8

FIG.9

receiving advertisement setting
demand applied in the inquired area ～S110

↓

collecting stores information, obtaining community
association and behavioral information of a plurality of
users, obtaining user behavioral sequential information of
the users, and obtaining advertisement location candidate
information based on the advertisement setting demand
to creating location based network structure diagram ～S120

↓

obtaining the behavioral pattern of the users in the
inquired area range based on the stores information ～S130
and the user behavior sequential information

↓

calculating a location based community influence degree of
each user in the inquired area range toward other location
based users in a community based on the behavior pattern
of the users and the community association and behavioral
information, and calculating an interest domain influence
degree of each user toward each interest domain, and obtaining
an influence diffusing degree of each user toward each interest
domain based on the location based community influence
and the interest domain influence degree of each user ～S140

↓

performing optimization of advertisement setting based
on a known influence probability of a plurality of
advertisement setting location candidates in the inquired ～S150
area range toward each user, the influence diffusion degree
of each user toward each interest domain and a budget

FIG.10

Europäisches
Patentamt

European
Patent Office

Office européen
des brevets

**EUROPEAN SEARCH REPORT**

Application Number

EP 15 19 9735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Phillip J. Windley: "The Live Web: Building Event-Based Connections in the Cloud"<br>In: "The Live Web: Building Event-Based Connections in the Cloud",<br>22 December 2011 (2011-12-22), Course Technology PTR, XP055242097,<br>ISBN: 978-1-133-68668-2<br>pages ToC-Ch01,<br>* page 5 - page 13 * | 1-16 | INV.<br>G06Q30/02 |
| X | George Coulouris ET AL: "Distributed Systems: Concepts and Design (5th Edition)"<br>In: "Distributed Systems: Concepts and Design (5th Edition)",<br>7 May 2011 (2011-05-07), Addison-Wesley, XP55247037,<br>ISBN: 978-0-13-214301-1<br>pages ToC, Pre, Ch01-Ch04, Ch06, Ch07, Ch09, Ch11, Ch19, Ch21,<br>* page 8 - pages 11, 15 *<br>* page 30 - page 31 *<br>* page 51 - page 56 *<br>* Chapter 19 * | 1-16 | |
| X | Wikipedia: "Mobile Web",<br>INTERNET ARTICLE,<br>7 October 2015 (2015-10-07), XP055242654,<br>Retrieved from the Internet:<br>URL:https://en.wikipedia.org/w/index.php?title=Mobile_Web&oldid=684647579<br>[retrieved on 2016-01-19]<br>* the whole document * | 1-16 | |

TECHNICAL FIELDS
SEARCHED    (IPC)

G06Q

-----

-----

-/--

-----

The present search report has been drawn up for all claims

| Place of search | Date of completion of the search | Examiner |
|---|---|---|
| Munich | 3 February 2016 | Krafft, Gerald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 15 19 9735

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jan-Keno Janssen: "Wo bist'n du? - Googles Geodienst Latitude", c't 03/2011, 17 January 2011 (2011-01-17), pages 86-88, XP055205403, Retrieved from the Internet: URL:http://www.heise.de/artikel-archiv/ct/2011/03/086/@000250@/ct.11.03.086-088.pdf [retrieved on 2015-07-30] * the whole document * | 1-16 | |
| X | GOMES JOÃO BÁRTOLO ET AL: "Where Will You Go? Mobile Data Mining for Next Place Prediction", 26 August 2013 (2013-08-26), CORRECT SYSTEM DESIGN; [LECTURE NOTES IN COMPUTER SCIENCE; LECT.NOTES COMPUTER], SPRINGER INTERNATIONAL PUBLISHING, CHAM, PAGE(S) 146 - 158, XP047039805, ISSN: 0302-9743 ISBN: 978-3-642-27256-1 * the whole document * | 1-16 | |

TECHNICAL FIELDS SEARCHED (IPC)

The present search report has been drawn up for all claims

| Place of search | Date of completion of the search | Examiner |
|---|---|---|
| Munich | 3 February 2016 | Krafft, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)